# EUROPEAN PATENT SPECIFICATION

(11) **EP 1 440 941 B1**
(45) Date of publication and mention of the grant of the patent: **13.09.2006**
(21) Application number: 04250290.6
(22) Date of filing: 21.01.2004
(51) Int. Cl.: C02F 1/32

(54) **Water treatment**
Wasserbehandlung
Traitement de l'eau

(30) Priority: 21.01.2003 GB 0301296
(43) Date of publication of application: 28.07.2004
(73) Proprietor: IMI CORNELIUS (UK) LIMITED, Alcester Warwickshire B49 6EU (GB)
(72) Inventor: Wiemer, Klaus, 42799 Leichlingen (DE); Altenbach, Heinz, 51379 Leverkusen (DE)
(74) Representative: Wightman, David Alexander

(56) References cited:
- WO-A-99/18040
- WO-A-99/58453
- WO-A-03/045835
- DE-A- 10 045 220
- GB-A- 356 926
- US-A- 4 757 921
- US-A- 5 744 028
- PATENT ABSTRACTS OF JAPAN vol. 2000, no. 13, 5 February 2001 (2001-02-05) & JP 2000 288559 A (ZENKEN:KK), 17 October 2000 (2000-10-17)

## Description

This invention relates to water treatment and in particular to the treatment of water with UV (ultra-violet) radiation. The invention has particular application to a water treatment unit for a drinks dispenser.

The quality of potable water for human consumption is regulated to control permissible levels of bacteria or other potentially harmful microorganisms that could cause illness or other health problems when the water is consumed.

Drinks dispensers for dispensing potable water are well known and care is required to avoid conditions under which bacteria may grow and contaminate the potable water supplied to the dispenser.

Problems may arise due to the contamination of the outlet resulting from human contact causing growth of bacteria that may be picked up by the water dispensed from the outlet. This problem is increased by the presence of stagnant water in the outlet between dispenses allowing growth of bacteria in the water that is next dispensed.

The present invention has been made with these problems in mind and seeks to improve the quality of potable water dispensed from a drinks dispenser by the use of UV radiation.

More especially, the aim of the invention is to expose the water and the flow passage through which it is dispensed to UV radiation to kill bacteria in the water and to restrict growth of bacteria in the flow passage.

A water treatment unit for treating water with UV radiation according to the preamble of claim 1 is known WO-A-99/58543

According to the present invention there is provided a water treatment unit as defined in claim 1.

Draining the flow passage between dispenses prevents growth of bacteria in stagnant water at the outlet.

Protecting the outlet prevents contamination of the outlet by human contact with the outlet and arranging the cover separate from the outlet prevents bacteria on the cover growing back into the outlet.

Preferably, a combined heat sink and reflector is provided enclosing the flow passage and UV lamp for absorbing heat from the lamp and reflecting UV radiation towards the flow passage.

Providing the combined heat sink and reflector to reflect the emitted UV radiation and to absorb the heat from the lamp improves the efficiency of the irradiation treatment and prevents the heat from the lamp being transferred to the dispensed water.

Preferably, a sensor is provided for actuating the UV radiation source in response to detection of a person in an active zone.

Arranging the sensor to actuate the UV radiation source in response to the presence of a person enables the UV treatment to be initiated before a dispense is actuated and further improves the effectiveness of the treatment.

A drinks dispenser incorporating the water treatment unit according to any of the foregoing aspects of the invention may be arranged to dispense still water and/or carbonated water and/or oxygenated water separately or in any combination.

The drinks dispenser preferably includes a filtration unit for treating the incoming water supply to remove bacteria with the UV irradiation at the outlet being used to reduce further the occurrence of bacteria in the dispensed water to low levels.

The UV radiation source may be arranged to be switched on permanently. Alternatively, the UV radiation source may be arranged to be switched on during dispense and to be switched off between dispenses.

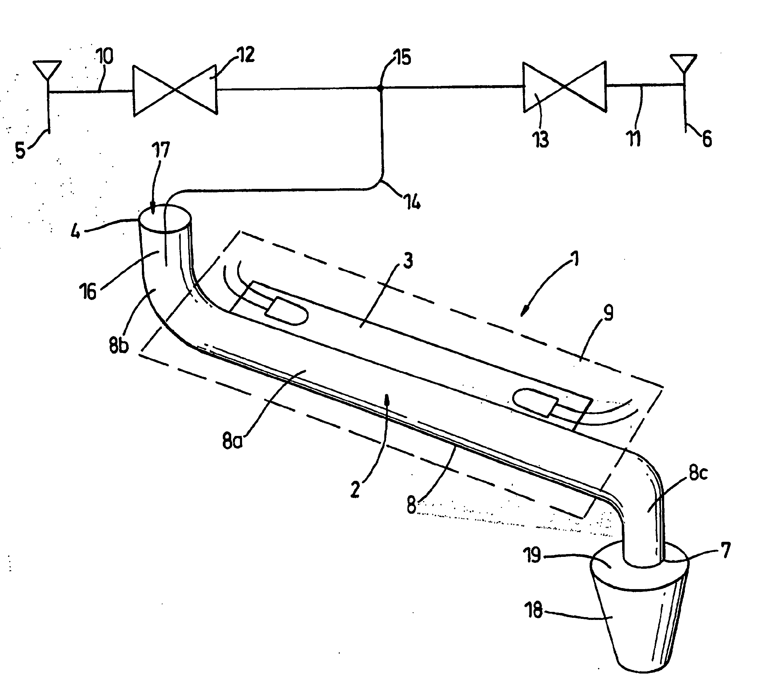

The invention will now be described in more detail, by way of example only, with reference to the accompanying drawing which illustrates diagrammatically a water treatment unit according to the present invention.

Referring to the drawing, there is shown a water treatment unit 1 for a drinks dispenser (not shown) for dispensing potable water.

The treatment unit 1 comprises an elongate glass tube 2 and a UV lamp 3 for irradiating the tube 2 with UV radiation. In this embodiment, the tube 2 is made of quartz glass but any other suitable material for transmitting UV radiation may be employed.

The tube 2 has an inlet 4 at one and for connection to sources 5,6 of still water or carbonated water and an outlet 7 for dispensing still or carbonated water.

Between the inlet 4 and outlet 7, the tube 2 provides a flow passage 8 of uniform cross-section.

The UV lamp is arranged to irradiate a linear centre section 8a of the flow passage 8 that in use is inclined at an angle of approximately 15° to the horizontal to assist draining the flow passage 8 as described later.

It will be understood, that the inclination of the flow passage 8 may be altered provided the inlet end is higher than the outlet end for draining the flow passage.

The centre section 8a leads to an inlet section 8b terminating in the inlet 4 at one end and to an outlet section 8c terminating in the outlet 7 at the other end.

In this embodiment, the inlet section 8b and outlet section 8c are arranged above and below the centre section 8a and extend substantially vertically. This assists drainage and ensures there are no pockets in the flow passage 8 where water could be trapped and retained when the unit 1 is drained. It will be understood, however, that the inlet section 8b and/or outlet section 8c may extend at an angle to the vertical.

The UV lamp 3 is arranged to extend parallel to and spaced from the centre section 8a of the flow passage 8. The lamp 3 may be of any suitable type and in this embodiment a 10W lamp with an arc length of approximately 200mm is employed.

The UV lamp 3 and centre section 8a of the flow passage 8 are located in an housing 9 of sheet metal, for example stainless steel, having a polished internal surface that acts as a mirror to reflect UV radiation striking the internal surface back towards the centre section 8a. The internal surface may be flat or curved or any other suitable shape as desired. In this way, the UV irradiation efficiency of the unit 1 is increased.

The housing 9 also acts as a heat sink to absorb heat given off by the UV lamp 3. In this way build-up of heat within the unit 1 is prevented and the water that is dispensed is not heated to an appreciable extent as it flows through the unit 1.

Separate supply lines 10, 11 from the sources 5, 6 of still or carbonated water are connected via on/off solenoid valves 12, 13 respectively to a common delivery line 14 at a T-piece 15. The sources 5, 6 may be separate reservoirs for storing still and carbonated water in the drinks dispenser until required.

The sources 5, 6 may be connected to an incoming supply of potable water and the dispenser may include a filtration unit to filter the incoming supply to remove impurities. The filtration unit may also treat the water to comply with water quality regulations.

The source 6 of carbonated water may be a carbonator tank to carbonate and store the carbonated water until required. Alternatively, an in-line carbonator may be provided in the supply line 11 to carbonate the water. In this case, the sources 5, 6 may be a common reservoir.

The drinks dispenser may also include a cooler for dispense of chilled water and/or a heater for dispense of hot water according to customer selection via an appropriate interface.

The delivery line 14 is provided by a length of flexible tube having an outer diameter that is smaller than the inner diameter of the tube 2. In this way, the delivery line 14 can be connected to the unit 1 by pushing the end of the flexible tube into the inlet section 8b of the flow passage 8 to leave a gap 16 therebetween that provides an air inlet 17 for draining the flow passage as described later.

The outlet 7 is arranged to dispense still or carbonated water into a receptacle such as a glass or cup. A protective cover 18 in the form of a nozzle is provided with a through hole 19 aligned with the outlet 7 for dispensed water to flow through.

The cover 18 is mounted separately from the outlet 7 and prevents a customer touching the outlet 7. In this way transfer of bacteria or other contamination to the outlet 7 by physical contact with the outlet 7 is prevented. The hole 19 is sized so that water dispensed from the outlet 7 can pass through without contacting the cover 18.

In use, a customer selects dispense of still or carbonated water via an appropriate interface (not shown) on the drinks dispenser. The solenoid valve 12, 13 for the selected drink opens and water passes to the UV treatment unit 1 via the delivery line 14 and is dispensed into a receptacle placed under the outlet 7 via the cover 18.

In a modification, both valves 12, 13 may be opened simultaneously or in sequence to dispense a mixture of still and carbonated water. Such combination may be variable according to user selection of the desired ratio of still water and carbonated water.

A flow meter or timer (not shown) measures the volume of liquid to be dispensed and closes the solenoid valve 12, 13 at the appropriate time.

The air inlet 17 provided at the inlet end of the tube 2 allows air to enter and drain the water from the tube 2 automatically so that no water remains in the treatment unit 1 between dispenses.

The time at which the solenoid valve 12, 13 closes may be arranged such that the dispense is completed when the treatment unit 1 has drained.

The UV lamp 3 may be switched on permanently to irradiate the flow passage 8 to prevent any bacteria growing in the flow passage 8 between dispenses and to kill any bacteria in the water that is dispensed.

Typically, the water supply to the drinks dispenser will be potable drinking water having a low bacteria level to comply with local regulations and the treatment unit 1 further improves the quality of this water by killing a large proportion of any bacteria that may be present.

For example, in Germany, regulations require potable drinking water to have a maximum bacteria level of 100CFU (colony forming units) and we have found that the treatment unit 1 can be effective to reduce significantly such permissible bacteria levels by a relatively short exposure to UV radiation.

For example, in the above embodiment where the tube 2 has an internal diameter of 10mm and a length of 250mm, approximately 90% of bacteria in the water can be killed at a flow rate of 1.5 litres/minute providing an exposure time to the UV radiation of approximately 1 second.

In this way, acceptable dispense times can be obtained with greatly improved water quality. It will be understood, however, that the dimensions, flow rate and exposure time are exemplary only and any of these can be varied as may the power of the UV lamp to provide any desired performance of the unit 1.

The cover 18 prevents the outlet 7 being touched by the customer and is separate from the tube 2 so that bacteria on the cover 18 cannot grow back into the treatment unit 1. The hole 19 in the cover 18 is arranged so that any bacteria present is not picked up by the water that is dispensed to any significant extent.

The cover 18 may be coated with or contain or be made of an antimicrobial agent to reduce or prevent bacterial growth resulting from a customer touching the cover 18. For example, the cover 18 may be coated with silver or a plastics material containing an antimicrobial agent such as Microban®.

In the above described embodiment, the UV lamp 3 is permanently on so as to kill bacteria in the water during dispense and prevent growth of any bacteria in the tube 2 between dispenses which could otherwise by picked up by the water during the next dispense. For example air borne bacteria that may be drawn into the tube 2 when the unit 1 is draining at the end of a dispense.

It will be understood, however, that it may not be necessary for the UV lamp 3 to be on permanently. For example, when a customer selects a drink, the UV lamp 3 may be switched on before the dispense starts to irradiate and kill any bacteria in the empty tube 2.

The lamp 3 then remains on during the dispense to kill bacteria in the water and is switched off at the end of the dispense or a short time after the dispense is completed when the unit 1 has drained so as to kill any bacteria that may have entered the tube 2 on drain down. The length of time the UV lamp 3 is switched on before and/or after dispense may be set as desired.

In a modification (not shown), the UV lamp 3 may be switched on in response to detection of a customer in an active zone of the drinks dispenser. For example, a sensor may be arranged to sense the presence of a customer and switch the UV lamp 3 on.

The lamp 3 may be switched off if a dispense is not selected within a pre-determined period of time or after a selected dispense has been completed. The sensor may be a proximity sensor of any suitable type.

In periods of low use, the UV lamp 3 may be switched on periodically between dispenses to kill any bacteria that may be present in the tube 2 so that bacteria cannot grow to a level that would not be killed during the next dispense.

In the above described embodiment, a single UV lamp 3 is employed and the emitted UV radiation is reflected by the polished internal surface of the housing to improve the efficiency of the irradiation of the flow passage 8 and water flowing through the passage 8 during dispense.

In a modification (not shown), a plurality of lamps may be provided with the number of lamps switched on being varied according to the operating condition of the unit 1.

For example, between dispenses one lamp may be switched on permanently to provide a UV radiation level sufficient to prevent growth of bacteria in the empty tube 2.

During dispense, additional lamps may be switched on to provide a higher UV radiation level to kill bacteria in the water and switched off again when the dispense is completed.

In this way, the life of the lamps may be increased. Also the higher UV levels during dispense may allow faster dispense of the water without reducing the effectiveness of the unit 1 in killing bacteria in the water.

A sensor or other suitable device (not shown) may be arranged to detect if a UV lamp 3 is not working and to prevent dispense. A warning light or other device may be activated locally to indicate that a UV lamp 3 requires replacement or a signal may be transmitted to a remote service location.

Sensors or other suitable devices (not shown) may also be arranged to monitor other functions of the dispenser and to provide an appropriate indication of the state of the function being monitored. For example, lamp life or filter life may be monitored and a signal provided to indicate when replacement is required. Such signal may be transmitted to a remote service location and/or activate warning light or other device locally.

Other variations and modifications will be apparent to those skilled in the art and it will be understood that the invention covers treatment units having any feature or combination of the features disclosed herein.

The term bacteria used herein is intended to include bacteria, microorganisms, microbes, germs and the like that can be killed by UV radiation and is to be construed accordingly.

The invention has been described in the exemplary embodiment with particular reference to a drinks dispenser for dispensing either still water or carbonated water or a mixture of still water and carbonated water. It will be understood however that the invention could apply to the dispense of other types of potable water such as oxygenated water.

A drinks dispenser according to the invention may be arranged for dispensing a plurality of different types of water either separately or as a mixture of two or more types as desired. Alternatively, a drinks dispenser according to the invention may be arranged for dispensing one type of water only. The invention may also apply to the addition of flavourings to the dispensed water, for example syrup or juice concentrates.

## Claims

1. A water treatment unit for a drinks dispenser for dispensing potable water, the unit (1) having an inlet (4) for potable water, an outlet (7) for dispense of potable water, a flow passage (8) between the inlet (4) and the outlet (7), a UV radiation source (3) for irradiating the flow passage (8) with UV radiation, and an air inlet (17) for draining the flow passage (8) between dispenses of potable water **characterised in that** the inlet (4) is connectable to a source of potable water, the flow passage (8) transmits UV radiation from the radiation source (3) for irradiating water within the flow passage (8), and a protective cover (18) is provided for the outlet (7), the cover (18) being separate from the outlet (7) and having an opening (19) through which potable water dispensed from the outlet (7) can pass without contacting the cover (18).

2. A water treatment unit according to claim 1 **characterised in that** a combined heat sink and reflector (9) is provided enclosing the flow passage (8) and UV radiation source (3) for absorbing heat from the UV radiation source (3) and reflecting UV radiation towards the flow passage (8).

3. A water treatment unit according to claim 2 **characterised in that** the combined heat sink and reflector (9) comprises a housing of sheet metal, for example stainless steel, having a mirror-like internal surface to reflect UV radiation towards the flow passage (8).

4. A water treatment unit according to any preceding claim **characterised in that** a sensor, for example a proximity sensor, is provided for actuating the UV radiation source (3) in response to detection of a person in an active zone.

5. A water treatment unit according to any preceding claim **characterised in that** the UV radiation source (3) can be switched on permanently.

6. A water treatment unit according to any of claims 1 to 4 **characterised in that** the UV radiation source (3) can be switched on during dispense and switched off between dispenses.

7. *.* A water treatment unit according to any preceding claim **characterised in tha**t the UV radiation source (3) comprises a plurality of UV lamps (3).

8. A water treatment unit according to any preceding claim **characterised in that** the UV radiation source (3) can vary the level of UV radiation, for example to provide a higher level during dispense than between dispenses.

9. A water treatment unit according to any preceding claim **characterised in that** the UV radiation source (3) is arranged to irradiate a centre section (8a) of the flow passage (8).

10. A water treatment unit according to claim 9 **characterised in that** the centre section (8a) extends downwards from the inlet (4) to the outlet (7), for example at an angle of around 15° to the horizontal.

11. A water treatment unit according to claim 10 **characterised in that** the centre section (8a) connects inlet and outlet sections (8b; 8c) that extend at a steeper angle to the horizontal than the centre section (8a), for example the inlet and outlet sections (8b,8c) may extend substantially normal to the horizontal.

12. A water treatment unit according to any preceding claim **characterised in that** air inlet (17) is provided in the inlet section (8b), for example by a gap (16) between the inlet section (8b) and a delivery line (14) received in the inlet section (8b).

13. A drinks dispenser provided with a water treatment unit according to any preceding claim capable of dispensing still water and/or carbonated water and/or oxygenated water separately or in any combination, optionally mixed with flavouring such as a juice or syrup concentrate

14. A drinks dispenser according to claim 13 **characterised in that** a filtration unit is provided upstream of the water treatment unit (1) for treating the incoming water supply.

## Patentansprüche

1. Wasserbehandlungseinheit für Getränkespender zur Ausgabe von Trinkwasser, wobei die Einheit (1) einen Einlass (4) für Trinkwasser, einen Auslass (7) für die Ausgabe von Trinkwasser, einen Strömungskanal (8) zwischen dem Einlass (4) und dem Auslass (7), eine UV-Strahlenquelle (3) zum Bestrahlen des Strömungskanals (8) mit UV-Strahlen und einen Lufteinlass (17) zum Entleeren des Strömungskanals (8) zwischen den Ausgaben von Trinkwasser aufweist, **dadurch gekennzeichnet, dass** der Einlass (4) an eine Trinkwasserquelle anschließbar ist, der Strömungskanal (8) UV-Strahlen von der Strahlungsquelle (3) zum Bestrahlen des Wassers in dem Strömungskanal (8) überträgt, und dass ein Schutzdeckel (18) für den Auslass (7) vorgesehen ist, wobei der Deckel (18) von dem Auslass (7) getrennt ist und eine Öffnung (19) aufweist, durch welche von dem Auslass (7) ausgegebenes Trinkwasser ohne Berührung des Deckels (18) hindurchgelangen kann.

2. Wasserbehandlungseinheit nach Anspruch 1, **dadurch gekennzeichnet, dass** ein kombinierter Wärmeableiter und Reflektor (9) vorgesehen ist, welcher den Strömungskanal (8) und die UV-Strahlungsquelle (3) umschließt, um Wärme von der UV-Strahlungsquelle (3) zu absorbieren und um die UV-Strahlung in Richtung des Strömungskanals (8) zu reflektieren.

3. Wasserbehandlungseinheit nach Anspruch 2, **dadurch gekennzeichnet, dass** der kombinierte Wärmeableiter und Reflektor (9) ein Gehäuse aus Metallblech, beispielsweise rostfreiem Stahl, aufweist, welches eine spiegelähnliche Innenfläche hat, um die UV-Strahlung in Richtung des Strömungskanals (8) zu reflektieren.

4. Wasserbehandlungseinheit nach einem der vorstehenden Ansprüche, **dadurch gekennzeichnet, dass** ein Sensor, beispielsweise ein Näherungssensor, vorgesehen ist, um die UV-Strahlungsquelle (3) in Abhängigkeit von der Erfassung einer Person in einer aktiven Zone zu betätigen.

5. Wasserbehandlungseinheit nach einem der vorstehenden Ansprüche, **dadurch gekennzeichnet, dass** die UV-Strahlungsquelle (3) permanent angeschaltet sein kann.

6. Wasserbehandlungseinheit nach einem der vorstehenden Ansprüche 1 bis 4, **dadurch gekennzeichnet, dass** die UV-Strahlungsquelle (3) während der Ausgabe angeschaltet und zwischen den Ausgaben abgeschaltet sein kann.

7. Wasserbehandlungseinheit nach einem der vorstehenden Ansprüche, **dadurch gekennzeichnet, dass** die UV-Strahlungsquelle (3) eine Vielzahl von UV-Lampen (3) aufweist.

8. Wasserbehandlungseinheit nach einem der vorstehenden Ansprüche, **dadurch gekennzeichnet, dass** die UV-Strahlungsquelle (3) den Grad der UV-Bestrahlung ändern kann, um beispielsweise einen höheren Grad während der Ausgabe als zwischen den Ausgaben zu erzeugen.

9. Wasserbehandlungseinheit nach einem der vorstehenden Ansprüche, **dadurch gekennzeichnet, dass** die UV-Strahlungsquelle (3) derart angeordnet ist, dass sie einen Mittelabschnitt (8a) des Strömungskanals (8) bestrahlt.

10. Wasserbehandlungseinheit nach Anspruch 9, **dadurch gekennzeichnet, dass** der Mittelabschnitt (8a) sich von dem Einlass (4) zum Auslass (7) nach unten erstreckt, beispielsweise in einem Winkel von etwa 15° zur Horizontalen.

11. Wasserbehandlungseinheit nach Anspruch 10, **dadurch gekennzeichnet, dass** der Mittelabschnitt (8a) Einlass- und Auslassabschnitte (8b; 8c) miteinander verbindet, welche sich in einem steileren Winkel zur Horizontalen als der Mittelabschnitt (8a) erstrecken, beispielsweise können sich die Einlass- und Auslassabschnitte (8b; 8c) im Wesentlichen normal zur Horizontalen erstrecken.

12. Wasserbehandlungseinheit nach einem der vorstehenden Ansprüche, **dadurch gekennzeichnet, dass** der Lufteinlass (17) in dem Einlassabschnitt (8b) vorgesehen ist, beispielsweise durch einen Spalt (16) zwischen dem Einlassabschnitt (8b) und einer Speiseleitung (14), die in dem Einlassabschnitt (8b) aufgenommen ist.

13. Getränkespender, versehen mit einer Wasserbehandlungseinheit nach einem der vorstehenden Ansprüche, welcher stilles Wasser und/oder kohlensäurehaltiges Wasser und/oder mit Sauerstoff versetztes Wasser getrennt oder in irgendeiner Kombination optional gemischt mit Geschmacksstoffen, wie beispielsweise einem Saft oder Sirupkonzentrat ausgeben kann.

14. Getränkespender nach Anspruch 13, **dadurch gekennzeichnet, dass** eine Filtereinheit stromaufwärts der Wasserbehandlungseinheit (1) zur Behandlung der einströmenden Wasserversorgung vorgesehen ist.

## Revendications

1. Module de traitement d'eau pour un distributeur de boissons destiné à distribuer de l'eau potable, ledit module (1) ayant une arrivée d'eau potable (4), une sortie (7) pour distribuer de l'eau potable, un passage d'écoulement (8) entre l'arrivée (4) et la sortie (7), une source de rayonnement ultraviolet (3) pour exposer le passage d'écoulement (8) à un rayonnement ultraviolet et une arrivée d'air (17) pour purger le passage d'écoulement (8) entre des distributions d'eau potable, **caractérisé en ce que** l'arrivée (4) peut être raccordée à une source d'eau potable, le passage d'écoulement (8) transmet le rayonnement ultraviolet venant de la source de rayonnement (3) pour exposer l'eau présente dans le passage d'écoulement (8) au rayonnement, et un cache protecteur (18) est prévu pour la sortie (7), le cache (18) étant séparé de la sortie (7) et possédant un orifice (19) à travers lequel l'eau potable distribuée à partir de la sortie (7) peut passer sans entrer en contact avec le cache (18).

2. Module de traitement d'eau selon la revendication 1, **caractérisé en ce qu'**il est prévu un dissipateur thermique et un réflecteur combinés (9) entourant le passage d'écoulement (8) et la source de rayonnement ultraviolet (3) pour absorber la chaleur dégagée par la source de rayonnement ultraviolet (3) et réfléchir le rayonnement ultraviolet en direction du passage d'écoulement (8).

3. Module de traitement d'eau selon la revendication 2, **caractérisé en ce que** le dissipateur thermique et le réflecteur combinés (9) comprennent un boîtier en tôle métallique, par exemple en acier inoxydable, ayant une surface interne semblable à un miroir pour réfléchir le rayonnement ultraviolet vers le passage d'écoulement (8).

4. Module de traitement d'eau selon l'une quelconque des revendications précédentes, **caractérisé en ce qu'**il est prévu un capteur, par exemple un détecteur de proximité, pour activer la source de rayonnement ultraviolet (3) en réponse à la détection de la présence d'une personne dans une zone active.

5. Module de traitement d'eau selon l'une quelconque des revendications précédentes, **caractérisé en ce que** la source de rayonnement ultraviolet (3) peut être activée en permanence.

6. Module de traitement d'eau selon l'une quelconque des revendications 1 à 4, **caractérisé en ce que** la source de rayonnement ultraviolet (3) peut être activée pendant la distribution et désactivée entre les distributions.

7. Module de traitement d'eau selon l'une quelconque des revendications précédentes, **caractérisé en ce que** la source de rayonnement ultraviolet (3) comprend une pluralité de lampes ultraviolettes (3).

8. Module de traitement d'eau selon l'une quelconque des revendications précédentes, **caractérisé en ce que** la source de rayonnement ultraviolet (3) permet de faire varier le niveau de rayonnement ultraviolet, par exemple pour donner pendant la distribution un niveau plus élevé qu'entre les distributions.

9. Module de traitement d'eau selon l'une quelconque des revendications précédentes, **caractérisé en ce que** la source de rayonnement ultraviolet (3) est disposée de façon à envoyer le rayonnement sur une partie centrale (8a) du passage d'écoulement (8).

10. Module de traitement d'eau selon la revendication 9, **caractérisé en ce que** la partie centrale (8a) s'étend vers le bas depuis l'arrivée (4) vers la sortie (7), par exemple selon un angle de 15 degrés environ par rapport à l'horizontale.

11. Module de traitement d'eau selon la revendication 10, **caractérisé en ce que** la partie centrale (8a) relie des parties d'arrivée et de sortie (8b, 8c) qui font un angle plus raide par rapport à l'horizontale que la partie centrale (8a), les parties d'arrivée et de sortie (8b, 8c) pouvant par exemple s'étendre sensiblement perpendiculairement à l'horizontale.

12. Module de traitement d'eau selon l'une quelconque des revendications précédentes, **caractérisé en ce que** l'arrivée d'air (17) est prévue dans la partie d'arrivée (8b), par exemple sous la forme d'un intervalle (16) entre la partie d'arrivée (8b) et une ligne de délivrance (14) reçue dans la partie d'arrivée (8b).

13. Distributeur de boissons équipé du module de traitement d'eau selon l'une quelconque des revendications précédentes, capable de distribuer de l'eau plate et/ou de l'eau gazeuse et/ou de l'eau enrichie en oxygène soit séparément, soit selon une combinaison quelconque, le cas échéant mélangée avec un arôme tel qu'un concentré de jus ou de sirop.

14. Distributeur de boissons selon la revendication 13, **caractérisé en ce qu'**il est prévu un module de filtration en amont du module de traitement d'eau (1) pour traiter l'alimentation en eau à l'entrée.
